# EUROPÄISCHE PATENTSCHRIFT

(11) **EP 2 961 093 B1**
(45) Veröffentlichungstag und Bekanntmachung des Hinweises auf die Patenterteilung: **13.11.2019**
(21) Anmeldenummer: 15160841.1
(22) Anmeldetag: 25.03.2015
(51) Int. Cl.: H04L 9/00, G06F 21/60, G06F 21/78, G01S 19/13, G01S 19/21, G01S 19/37, H04K 1/02

(54) **GESICHERTES BEREITSTELLEN EINES REPLIKA-PSEUDO-ZUFALLSRAUSCHCODES AN EINE EMPFÄNGEREINHEIT**
SECURE PROVISION OF A REPLICA PSEUDO-RANDOM NOISE CODE TO A RECEIVER UNIT
MISE À DISPOSITION SÉCURISÉE D'UN CODE DE BRUIT PSEUDO-ALÉATOIRE POUR UNE UNITÉ RÉCEPTRICE

(30) Priorität: 27.06.2014 DE 102014212488
(43) Veröffentlichungstag der Anmeldung: 30.12.2015
(73) Patentinhaber: Siemens Aktiengesellschaft, 80333 München (DE)
(72) Erfinder: Falk, Rainer, 85586 Poing (DE)

(56) Entgegenhaltungen:
- EP-A1- 2 746 810
- WO-A1-2011/027191
- DE-B4-102011 075 434
- US-A- 5 365 447
- US-A1- 2010 278 335

## Beschreibung

Die Erfindung betrifft ein Verfahren sowie eine Bereitstellungseinheit zum gesicherten Bereitstellen eines Replika-Pseudo-Zufallsrauschcodes an eine Empfängereinheit.

Pseudo-zufällige Codefolgen, sogenannten Pseudo-Zufallsrauschcodes oder Pseudo-Random-Number-Codes, kurz PRNC oder PRN-Codes, werden beispielsweise bei der Funkübertragung verwendet. Es handelt sich dabei um Spreizcodes, welche eine Frequenzspreizung eines Nachrichtensignals bewirken. Durch die breitbandige Übertragung weist ein solches Signal eine hohe Robustheit gegenüber Störungen auf. Spreizungsfolgen werden beispielsweise in Satellitennavigationssystemen wie GPS, Glonass, Beidou oder Galileo verwendet. Dabei liegt das ausgestrahlte Satellitensignal unterhalb eines Rauschpegels. Ein Empfänger kann das ausgestrahlte Signal erst durch Korrelation mit einem ihm selbst vorliegenden passenden PRN-Code decodieren. Es handelt sich dabei in der Regel um den identischen PRN-Code, der beispielsweise bereits im Empfänger vorliegen kann. Man kann auch von einem Replika-PRN-Code sprechen, welcher ein rekonstruierter oder nachgebildeter oder als zweite Ausführung vorliegender PRN-Code ist.

Es ist bekannt, kryptographische PRN-Codes zu verwenden. Die Codefolge wird dabei abhängig von einem kryptographischen Schlüssel erzeugt. Ein Empfänger kann den passenden PRN-Code zur Decodierung des Empfangssignals nur generieren, wenn er den zur Aussendung des Signals vom Sender verwendeten PRN-Code kennt. Dazu benötigt er den kryptographischen Schlüssel.

Der Empfänger, vor allem die Signalverarbeitung auf dem Empfänger, ist dabei aufwändig durch Sicherheitsmechanismen vor Angreifern zu schützen. Beispielsweise muss ein FPGA, auf dem die kryptographischen Signale bearbeitet werden, über Abstrahlschutz oder Tamperschutz teuer gesichert werden.

Es ist allgemein bekannt, Rohdaten eines empfangenen GPS-Signals zu digitalisieren und aufzuzeichnen. Die Rohdaten werden zu einem Cloud-Service übertragen, so dass die Signalverarbeitung auf einem Server realisiert wird. Der Server kann dabei speziell geschützt werden, so dass die securitykritische kryptographische Signalverarbeitung in einem sicheren Rechenzentrum erfolgt. Dabei muss allerdings ein großer Anteil der Serverumgebung inklusiver genutzter Datenübertragungswege wiederum aufwändig geschützt werden.

Die US-Patentschrift US 5 365 447 A beschreibt ein Satelliten Navigationssystem mit verbesserter Genauigkeit und Zuverlässigkeit über große geographische Gebiete hinweg und insbesondere in abgelegenen Gebieten. Navigations- und Korrekturinformationen werden an einem Referenzort aus den Signalen von geostationären Telekommunikationssatelliten und von GPS gewonnen und für die Signalverarbeitung durch einen abgelegenen Empfänger verwendet, der ebenfalls Signale von geostationären Telekommunikationssatelliten und von GPS erhält.

Die Internationale Veröffentlichungsschrift WO 2011/027191 A1 beschreibt eine Verfahren in einem Speichergerät für eine Zugriffskontrolle auf geschützte Daten, die in dem Speichergerät gespeichert sind.

Einem Angreifer soll es dabei möglichst schwer fallen, in Besitz eines PRN-Codes, der empfängerseitig erzeugt und bereitgestellt wird, zu gelangen. Dies soll auch für den Fall sichergestellt werden, in dem der Angreifer auf einen Empfänger zugreifen kann und versucht, diesen zu manipulieren.

Vor diesem Hintergrund ist es eine Aufgabe der vorliegenden Erfindung, ein Verfahren und eine Bereitstellungseinheit zu schaffen, welche das Verwenden eines Replika-Pseudo-Zufallsrauschcodes empfängerseitig sicher gestaltet.

Diese Aufgabe wird durch die unabhängigen Ansprüche gelöst. Vorteilhafte Ausgestaltungen sind in den abhängigen Ansprüchen angegeben.

Die Erfindung betrifft ein Verfahren zum gesicherten Bereitstellen eines Replika-Pseudo-Zufallsrauschcodes von einer Bereitstellungseinheit an eine Empfängereinheit, wobei mittels des Replika-Pseudozufallsrausch-Codes eine Korrelation mit einem Empfangssignal durchgeführt wird, dadurch gekennzeichnet, dass der Replika-Pseudo-Zufallsrauschcode eingeschränkt in Abhängigkeit von einem Ergebnis einer Zulässigkeitsprüfung bereitgestellt wird, wobei zum Durchführen der Zulässigkeitsprüfung Werte erfasst werden und mit vorgegebenen Schwellenwerten abgeglichen werden, wobei Eigenschaften des Empfangssignals bei der Zulässigkeitsprüfung berücksichtigt werden.

Unter einem Replika-Pseudo-Zufallsrauschcode wird in der vorliegenden Anmeldung eine Codefolge verstanden, welche in einem Korrelationsverfahren empfängerseitig eingesetzt wird, um ein Empfangssignal von einem Sender decodieren zu können, wobei der Sender einen zu dem Replika-Pseudo-Zufallsrauschcode gehörigen Pseudo-Zufallsrauschcode zur Modulation des Signals verwendet hat. Ein Replika-Pseudo-Zufallsrauschcode bildet somit gemeinsam mit einem Pseudo-Zufallsrauschcode ein Paar, welches zueinander passen und insbesondere hinsichtlich der Bitfolge des Codes identisch sein muss, damit der Pseudo-Zufallsrauschcode des Empfangssignals empfängerseitig decodierbar ist. Bei einem vom Sender verwendeten kryptographisch erzeugten Pseudo-Zufallsrauschcode muss überdies auch empfängerseitig der passende, insbesondere gleiche, symmetrische Schlüssel vorhanden sein, damit der passende Replika-Pseudo-Zufallsrauschcode erzeugt werden kann.

Damit wird das Erzeugen des Replika-Pseudo-Zufallsrauschcodes, welcher vom Empfänger für ein Decodieren des Empfangssignals benötigt wird, nur ermöglicht, falls das Ergebnis der Zulässigkeitsprüfung anzeigt, dass das Bereitstellen kein Sicherheitsrisiko darstellt. Die Zulässigkeitsprüfung ist dabei in mindestens zwei Abschnitte gegliedert: Zunächst werden Werte erfasst und die erfassten Werte werden mit vorgegebenen Schwellenwerten abgeglichen. Empfängerseitig wird somit eine Prüfung durchgeführt, die Eigenschaften des Empfangssignals oder des Empfängers oder der Umgebung bei der Zulässigkeitsprüfung berücksichtigen kann. Das Ergebnis der Zulässigkeitsprüfung kann darin bestehen, einen Replika-Pseudo-Zufallsrauschcode auszugeben oder nicht auszugeben oder im letzteren Fall einen Warnhinweis auszugeben, dass die Zulässigkeitsprüfung nicht bestanden wurde.

Der Replika-Pseudo-Zufallsrauschcode kann dabei explizit als Bitfolge oder als Folge von Bytes oder Wörtern einer Wortbreite, beispielsweise 16, 32, 64, 128, 256 Bits, bereitgestellt werden. Der Replika-Pseudo-Zufallsrauschcode kann auch in einem Archivdateiformat bereitgestellt werden, beispielsweise im Format tar, zip oder rar.

Es ist ferner möglich, Informationen zur Generierung eines Replika-Pseudo-Zufallsrauschcodes bereitzustellen. Beispielsweise wird für eine bekannte Implementierung eines Replika-Pseudo-Zufallsrauschcode-Generators, welcher eine innere Zustandsinformation verwendet in Form einer Datenstruktur, eine Zustandsdatenstruktur als Replika-Pseudo-Zufallsrauschcodes bereitzustellen. Diese Zustandsdatenstruktur kann insbesondere einen kryptographischen Schlüssel und einen Zählerwert in obfuszierter oder verschlüsselter Form umfassen. Ferner kann eine Information zur zulässigen Nutzung einer inneren Zustandsinformation enthalten sein, beispielsweise eine Längenangabe eines erzeugbaren Codes. Das bedeutet, dass bei diesen Varianten statt des eigentlichen Replika-Pseudo-Zufallsrauschcodes in Form einer Bitfolge eine Hilfsinformation als Replika-Pseudo-Zufallsrauschcode bereitgestellt wird, die eine Bestimmung des Codeabschnittes als Bitfolge oder als Replika-Pseudo-Zufallsrauschsignal ermöglichen.

Es kann sich bei dem Empfangssignal beispielsweise um ein Datenübertragungssignal oder ein Satellitensignal handeln. Den Signalen ist dabei gemeinsam, dass sie für einen Dienst genutzt werden, der Signale mittels PRN-Codes aussendet.

Auf vorteilhafte Weise kann ein Empfänger, welcher kompromittiert wurde und welcher missbräuchlich durch den Angreifer verwendet werden soll, einen mit Pseudo-Zufallsrauschcodes oder kryptographischen Pseudo-Zufallsrauschcodes geschützten Dienst nur eingeschränkt empfangen oder nutzen. Das aufwendige Verbauen eines Sicherheitsmoduls oder ein aufwendiger Sicherheitsschutz von Baugruppen des Empfängers kann reduziert werden und insbesondere auf die Bereitstellungseinheit beschränkt werden. Damit wird ein Empfänger zur Nutzung eines über Pseudo-Zufallsrauschcodes geschützten Dienstes günstiger herstellbar und dennoch ist eine Decodierung von Empfangssignalen nur im Falle eines positiven Ergebnisses der Zulässigkeitsprüfung möglich. Auf vorteilhafte Weise wird nicht eine gesamte Signalverarbeitungseinheit des Empfängers durch Sicherheitsmechanismen geschützt, sondern lediglich der Bereich, auf welchem aus einem kryptographischen Schlüssel mit Hilfe eines Replika-Pseudo-Zufallsrauschcode-Generators ein kryptographischer Replika-Pseudo-Zufallsrauschcode erzeugt werden soll. Dort ist auch die Zulässigkeitsprüfung realisiert. Vorzugsweise wird das Durchführen der Zulässigkeitsprüfung in einem durch Sicherheitsmechanismen geschützten Bereich durchgeführt, so dass sichergestellt wird, dass der Replika-Pseudo-Zufallsrauschcode erst auf dem Empfänger zugänglich zur Verfügung steht und insbesondere durch eine Signalverarbeitungseinheit verarbeitet werden kann, sobald die Zulässigkeitsprüfung in unmanipulierter Weise durchgeführt wurde und ein positives Ergebnis geliefert hat.

Gemäß einer Ausgestaltung wird mittels des Replika-Pseudo-Zufallsrauschcodes eine Korrelation mit einem Empfangssignal durchgeführt.

Dabei wird insbesondere kontinuierlich ein durch die Empfängereinheit empfangbares Empfangssignal in einer Signalverarbeitung korreliert. Somit können sich Abschnitte abwechseln, in denen ein Signal, beispielsweise ein Datenübertragungssignal oder ein Satellitensignal, durch die Korrelation erkannt wird und in welchem ein Ergebnis der Korrelation darin besteht, dass der Empfänger kein von einem Sender ausgestrahltes Signal erkennt.

Gemäß einer Ausgestaltung ist ein in einem durch die Empfängereinheit empfangenen Empfangssignal enthaltener Pseudo-Zufallsrauschcode mittels einer Korrelationsmethode mit Hilfe des Replika-Pseudo-Zufallsrauschcodes decodierbar. Das Empfangssignal weist insbesondere nur einen Pseudo-Zufallsrauschanteil auf.

Gemäß einer Ausgestaltung wird ein in einem durch die Empfängereinheit empfangenen Empfangssignal enthaltenes Pseudo-Zufallsrauschsignal mittels einer Korrelationsmethode ausgewertet.

Es kann dabei beispielsweise ein Zeitversatz zwischen dem Empfangssignal mit dem Pseudo-Zufallsrauschsignal und dem empfängerseitig erzeugten Replika-Pseudo-Zufallsrauschsignal ermittelt werden. Insbesondere handelt es sich bei dem Empfangssignal um ein Satellitensignal. Es können ferner Zeitinformationen oder Positionsinformationen oder Entfernungsinformationen bestimmt werden, insbesondere sofern mehrere Satellitensignale durch die Empfängereinheit empfangen werden.

Gemäß einer Ausgestaltung wird ein Pseudo-Zufallsrauschsignal durch die Empfängereinheit als Bestandteil eines Empfangssignals, insbesondere eines Satellitennavigationssignals, empfangen.

Es kann über die Auswertung des Empfangssignals mittels Korrelation mit dem Replika-Pseudozufallsrauschsignal jeweils ein Zeitversatz ermittelt werden, aus dem sich je nach Anzahl der empfangbaren Satellitensignale und je nach Ergebnis der Zulässigkeitsprüfung ein Pseudorange oder eine Position-Geschwindigkeit-Zeit-Information ableiten lässt.

Gemäß einer Ausgestaltung wird zum Durchführen der Zulässigkeitsprüfung ein Satellitenidentifizierer des Empfangssignals erfasst.

Der Satellitenidentifizierer oder Space Vehicle Identifier gibt an, von welchem Sender das Empfangssignal stammt. Es kann auf vorteilhafte Weise nur für ausgewählte Satellitenidentifizierer die Zulässigkeitsprüfung ein positives Ergebnis ergeben. Die Auswahl der ausgewählten Satellitenidentifizierer kann dabei fest oder zeitlich variabel, beispielsweise abhängig von einer erwarteten Konstellation von Satelliten sein. Ferner kann nur eine begrenzte maximale Anzahl von Satellitenidentifizierern für einen Empfänger ein positives Ergebnis der Zulässigkeitsprüfung erzielen. Beispielsweise soll nur für maximal einen oder maximal zwei Satelliten je Empfänger das Empfangssignal decodierbar sein. Ferner ist es denkbar, dass für eine vorgegebene Zeitspanne Empfangssignale einer begrenzten Anzahl unterschiedlicher Satelliten decodierbar sein sollen, beispielsweise für maximal zwei Satelliten je Stunde.

Die gewählten Einschränkungen können dabei in einer Variante fest sein, d.h. für einen Empfänger nicht veränderbar.

In einer Variante sind Replika-Pseudo-Zufallsrauschcodes nur für bestimmte, festgelegte Satellitennavigationssysteme generierbar.

Gemäß einer Ausgestaltung wird zum Durchführen der Zulässigkeitsprüfung ein Frequenzband des Empfangssignals erfasst. Beispielsweise ist nur für bestimmte Frequenzbänder, beispielsweise E1 oder E6, das Empfangssignal decodierbar. Dafür wird einer Bereitstellungseinheit, welche die Zulässigkeitsprüfung durchführt, der Wert für das Frequenzband von der Signalverarbeitungseinheit bereitgestellt. Erst wenn das Frequenzband zulässig ist, stellt die Bereitstellungseinheit den Replika-Pseudo-Zufallsrauschcode bereit und die Signalverarbeitung kann die Korrelation zur Decodierung des Empfangssignals durchführen.

Gemäß einer Ausgestaltung wird zum Durchführen der Zulässigkeitsprüfung eine Information über Satellitenbahndaten erfasst. Insbesondere werden sogenannte Almanach-Informationen ausgewertet. Dabei wird erkannt, falls ein Replika-Pseudo-Zufallsrauschcode erzeugt werden soll, der für die Decodierung eines Empfangssignals von einem aufgrund der aktuellen Position des Empfängers nicht zu erwartenden Satelliten erzeugt werden soll. Beispielsweise können über die Almanach-Daten die für einen Zeitpunkt für den Empfänger aufgrund der Position sichtbaren Satelliten festgelegt werden und nur für diese ein passender Replika-Pseudo-Zufallsrauschcode erzeugt werden.

Gemäß einer Ausgestaltung wird zum Durchführen der Zulässigkeitsprüfung ein Zeitwert erfasst. Beispielsweise kann damit erreicht werden, dass nur in vorgebbaren zeitlichen Abständen ein Replika-Pseudo-Zufallsrauschcode bereitgestellt werden kann, beispielsweise nur alle 10 s oder alle 60 s oder alle 3600 s. Damit kann beispielsweise erreicht werden, dass eine hochdynamische Navigation mit dem Empfänger nicht möglich ist. Dies kann vorteilhaft sein, falls der Empfänger für eine weniger genaue Navigation ausgerichtet sein soll und durch einen Angreifer nicht missbraucht werden soll.

Es ist ferner eine kombinierte Erfassung verschiedener der vorstehend genannten Werte möglich. Beispielsweise kann vorteilhaft festgelegt werden, dass bei Anfrage eines Replika-Pseudo-Zufallsrauschcodes für einen bestimmten Satelliten für einen bestimmten Zeitabschnitt erst dann ein Replika-Pseudo-Zufallsrauschcode für einen anderen Satelliten abgefragt werden kann, wenn der festgelegte Zeitabschnitt für eine vorgebbare Zeitdauer bereits verstrichen ist. Ferner ist es möglich, dass die Zeitabschnitte des Replika-Pseudo-Zufallsrauschcodes von zwei unterschiedlichen Satelliten sich nicht überlappen dürfen oder einen zeitlichen Mindestabstand aufweisen müssen. Ferner kann festgelegt werden, dass zwar für einen beliebigen Satelliten ein Replika-Pseudo-Zufallsrauschcode angefragt werden kann, gleichzeitig aber nicht für beliebig viele verschiedene Satelliten. Beispielsweise kann nur für einen oder für zwei Satelliten ein Replika-Pseudo-Zufallsrauschcode empfängerseitig abgefragt und generiert werden. Somit kann insbesondere nur eine Zeitinformation über den mittels Pseudo-Zufallsrauschcode geschützten Dienst ermittelt werden, allerdings keine PVT-Bestimmung zur Ermittlung einer Position, Geschwindigkeit und Zeit erfolgen. Dafür sind mindestens drei verschiedene Satellitensignale erforderlich, falls eine lokale hochgenaue Echtzeituhr vorliegt oder vier verschiedene Satellitensignale. Somit wird die Verwendung des Empfängers durch den Umfang der von ihm ausgeführten Funktionalitäten beschränkt. Ein Angreifer ist somit auf die für den Empfänger vorgesehenen Funktionen beschränkt.

Gemäß einer Ausgestaltung wird zum Durchführen der Zulässigkeitsprüfung ein Beschleunigungswert oder Lagewert der Empfangseinheit mittels eines Sensors erfasst. Die Empfängereinheit oder ein integriertes Security-Modul kann beispielsweise über einen Beschleunigungssensor oder einen Höhensensor verfügen, um eine Beschleunigung oder Höhe zu erfassen. Der Replika-Pseudo-Zufallsrauschcode wird beispielsweise nur dann bereitgestellt, wenn keine Beschleunigung oberhalb eines Schwellwertes oder keine Höhe oberhalb einer Höchstgrenze vorliegt. Auch dadurch kann eine unerwünschte Nutzung des Empfängers eingeschränkt werden. Geostationäre Empfänger, welche beispielsweise aus einer Position herunterfallen oder demontiert wurden und möglicherweise manipuliert wurden, erkennen über die verbauten Sensoren einen möglichen Angriff. In einem solchen Fall kann die Funktionsweise des Empfängers durch ein Stoppen der Replika-Pseudo-Zufallsrauschcode-Generierung vollständig eingeschränkt werden. Der Empfänger wird dadurch für den Empfang von Pseudozufallsrauschsignalen unbrauchbar.

Gemäß einer Ausgestaltung wird zum Durchführen der Zulässigkeitsprüfung eine Historie über zeitlich vor dem Durchführen bereitgestellte Replika-Pseudo-Zufallsrauschcodes geprüft. Eine Speichereinheit ist für das Hinterlegen von bereits angefragten und/oder ausgegebenen Replika-Pseudozufallsrauschsignale vorgesehen.

Die Erfindung betrifft ferner eine Bereitstellungseinheit zum gesicherten Bereitstellen eines Replika-Pseudo-Zufallsrauschcodes an eine Empfängereinheit mit einer Zulässigkeitsprüfeinheit zum eingeschränkten Bereitstellen des Replika-Pseudo-Zufallsrauschcodes in Abhängigkeit von einem Ergebnis einer Zulässigkeitsprüfung, wobei zum Durchführen der Zulässigkeitsprüfung Werte erfassbar und mit vorgegebenen Schwellenwerten abgleichbar sind.

Gemäß einer Ausgestaltung weist die Bereitstellungseinheit ferner einen Replika-Pseudo-Zufallsrauschcode-Generator zum Generieren des Replika-Pseudo-Zufallsrauschcodes auf. Alternativ ist der Replika-Pseudo-Zufallsrauschcode-Generator extern realisiert.

Gemäß einer Ausgestaltung weist die Bereitstellungseinheit ferner einen Schlüsselgenerator oder einen Schlüsselspeicher zum Erzeugen eines kryptographischen Schlüssels auf. Mittels des kryptographischen Schlüssels ist ein kryptographischer Replika-Pseudo-Zufallsrauschcode generierbar. Gemäß einer Ausgestaltung ist die Bereitstellungseinheit auf einem Empfänger mit Empfängereinheit ausgebildet. In einer Variante wird ein gespeicherter kryptographischer Schlüssel der Bereitstellungseinheit durch diese gelöscht, wenn das Ergebnis einer Zulässigkeitsprüfung eine unzulässige Nutzung der Bereitstellungseinheit ergibt.

Gemäß einer Ausgestaltung ist ein Tamper-Schutz zum Erkennen einer Manipulation oder Beschädigung für die Bereitstellungseinheit vorgesehen. Auf vorteilhafte Weise kann der Tamper-Schutz ein Security-Modul sein, wobei das Security-Modul den Replika-Pseudo-Zufallsrauschcode-Generator sowie zumindest die Zulässigkeitsprüfeinheit umfasst. Vorteilhafterweise ist zusätzlich der Schlüsselgenerator oder Schlüsselspeicher auf dem Security-Modul realisiert.

Die vorliegende Erfindung wird anhand von Ausführungsbeispielen mit Hilfe der Figuren näher erläutert.

Es zeigen:
- Figur 1: eine schematische Darstellung des Verfahrens zum gesicherten Bereitstellen eines Replika-Pseudo-Zufallsrauschcodes an eine Empfängereinheit;
- Figur 2: eine schematische Darstellung eines Empfängers mit Bereitstellungseinheit zum gesicherten Bereitstel-len eines Replika-Pseudo-Zufallsrauschcodes gemäß einem ersten Ausführungsbeispiel der Erfindung;
- Figur 3: eine schematische Darstellung eines Empfängers mit Bereitstellungseinheit zum gesicherten Bereitstel-len eines Replika-Pseudo-Zufallsrauschcodes gemäß einem zweiten Ausführungsbeispiel der Erfindung.

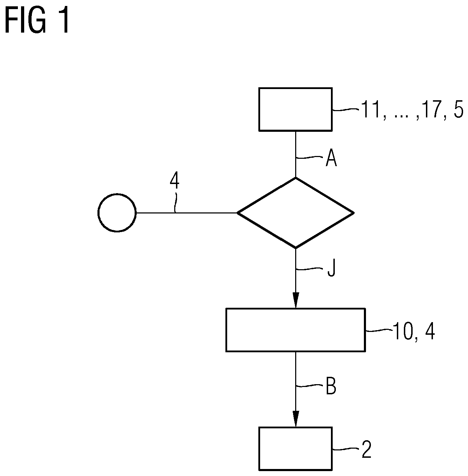

Figur 1 zeigt schematisch, wie unter Zuhilfenahme von Werten 11, ..., 17 das Durchführen A einer Zulässigkeitsprüfung stattfindet. Dabei kommt es beim Durchführen A der Zulässigkeitsprüfung zu einem Ergebnis J, N, wobei im Falle eines negativen Ergebnisses N der Replika-Pseudo-Zufallsrauschcode 10 nicht bereitgestellt wird. Beispielsweise wird für diesen Fall ein Alarmsignal ausgegeben, dass die Zulässigkeitsprüfung nicht bestanden wurde. Für den Fall eines positiven Ergebnisses J wird der Replika-Pseudo-Zufallsrauschcode 10 beispielsweise durch einen Replika-Pseudo-Zufallsrauschcode-Generator 4 erzeugt und es erfolgt das Bereitstellen B an eine Empfängereinheit 2.

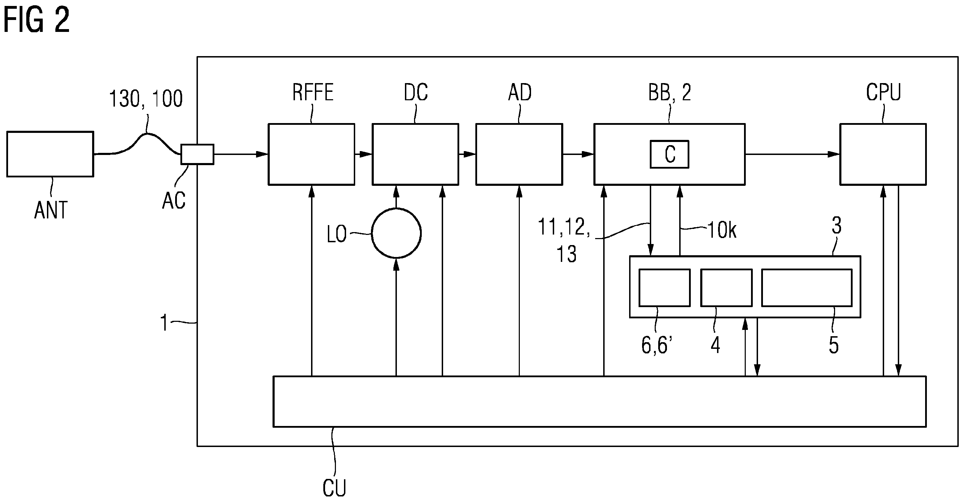

In Figur 2 ist schematisch dargestellt, wie ein Empfänger 1 mit integrierter Bereitstellungseinheit 3 gemäß einem ersten Ausführungsbeispiel der Erfindung aufgebaut ist. Der Empfänger 1 verfügt über eine Antennenbuchse AC, mittels welcher eine Antenne ANT angeschlossen werden kann. Ein von der Antenne ANT bereitgestelltes Empfangssignal 130 wird zunächst von einer Hochfrequenzbaugruppe RFFE, dem sogenannten Radio Frequency Front End, bearbeitet. Dabei findet eine Filterung und Verstärkung statt. Danach wird das Signal einem Down-Converter DC bereitgestellt, der das Signal mit einem Signal eines Local Oscillators LO mischt und somit eine Down-Conversion durchführt. Das Signal wird dann einem Analog-Digital-Wandler AD bereitgestellt. Dieser leitet das digitalisierte Signal an die Basisbandverarbeitung BB weiter. Der Empfänger wird dabei von einer Steuerung CU oder Control Unit gesteuert. Diese konfiguriert die einzelnen Baugruppen, beispielsweise um ein passendes Frequenzband zu wählen durch Änderung der Frequenz des Local Oscillators LO oder beispielsweise um den Eingangsfilter der Hochfrequenzbaugruppe RFFE zu konfigurieren oder beispielsweise um die Bandbreite oder Abtastrate des Analog-Digital-Wandlers AD zu konfigurieren oder um ein Modulationsverfahren der Basisbandverarbeitung BB auszuwählen.

Die Basisbandverarbeitung BB ist typischerweise auf einem Field Programmable Gate Array Baustein, kurz FPGA-Baustein, realisiert. Der Basisbandverarbeitung BB wird durch eine Bereitstellungseinheit 3 ein kryptographischer Replika-Pseudo-Zufallsrauschcode 10K bereitgestellt. Die Basisbandverarbeitungseinheit ist als Empfängereinheit 2 des Empfängers für die Korrelation des Empfangssignals mit dem kryptographischen Replika-Pseudo-Zufallsrauschcode 10K ausgebildet.

Die Bereitstellungseinheit 3 weist einen Replika-Pseudo-Zufallsrauschcode-Generator 4 auf. Ein Schlüsselgenerator 6 oder Schlüsselspeicher 6' ist ferner dafür vorgesehen, einen kryptographischen Schlüssel K zu erzeugen oder abzuspeichern. Der Replika-Pseudo-Zufallsrauschcode-Generator 4 ist ausgebildet, einen kryptographischen Replika-Pseudo-Zufallsrauschcode 10K zu generieren und wählt insbesondere je nach Einsatzgebiet oder je nach Ort, an dem sich der Empfänger 1 befindet oder je nach Zeitpunkt, zu dem eine Signalverarbeitung stattfinden soll, einen geeigneten kryptographischen Schlüssel K. Insbesondere können mehrere Schlüssel vorgesehen sein, aus denen jeweils ein spezifischer Replika-Pseudo-Zufallscode generiert wird. Beispielsweise sind für verschiedene Satellitensysteme verschiedene Schlüssel vorgesehen.

Durch die Basisbandverarbeitung BB werden Werte, welche das Satellitensignal kennzeichnen, wie beispielsweise Satellitenidentifizierer 11, Frequenzband 12 oder Satellitenbahndaten 13, ausgewertet und der Bereitstellungseinheit 3 bereitgestellt. Eine Zulässigkeitsprüfeinheit 5 berücksichtigt diese Werte beim Durchführen der Zulässigkeitsprüfung und ermittelt ein positives Ergebnis nur dann, wenn die Werte im Vergleich zu Schwellwerten auf eine unbedenkliche Verwendung des Replika-Pseudo-Zufallsrauschcodes 13 hindeuten. Unbedenklich kann dabei insbesondere bedeuten, dass die Zulässigkeitsprüfeinheit 5 die Decodierung eines aufgrund der Werte charakterisierten Empfangssignals erwartet, beispielsweise aufgrund einer erwarteten Position des Empfängers oder des jeweiligen sendenden Satelliten. Die Bereitstellungseinheit 3 ist als Security-Modul ausgestaltet und vor Angriffen physikalisch geschützt verbaut. Beispielsweise wird das Security-Modul durch Vergießen in Epoxydharz oder Einbringen einer Bohrschutzfolie gesichert. Leitungen, welche von dem Sicherheitsmodul wegführen, werden gefiltert, um sicherzustellen, dass keine kritischen Signale nach außen dringen.

Die Bereitstellungseinheit 3 umfasst einen Schlüsselgenerator 6 oder Schlüsselspeicher 6' zum Bereitstellen des kryptographischen Schlüssels, den Replika-Pseudo-Zufallsrauschcode-Generator zum Bereitstellen des kryptographischen Replika-Pseudo-Zufallsrauschcodes sowie die Zulässigkeitsprüfeinheit 5, welche das Bereitstellen des Replika-Pseudo-Zufallsrauschcodes bzw. des kryptographischen Replika-Pseudo-Zufallsrauschcodes einschränkt. Es ist dabei insbesondere ausreichend, lediglich diese Baugruppen innerhalb der Bereitstellungseinheit über das Sicherheitsmodul zu schützen. Somit kann ein günstiger Empfänger geschaffen werden, bei welchem nicht die gesamte Signalverarbeitung des Empfängers über Tamper-Schutzmaßnahmen geschützt werden muss.

Nur für den Fall, dass das Ergebnis der Zulässigkeitsprüfung positiv ist, wird der kryptographische Replika-Pseudo-Zufallsrauschcode 10K von der Bereitstellungseinheit 3 an die Empfängereinheit 2, welche beispielsweise die Basisbandverarbeitung BB darstellen kann, übermittelt. Dort wird der kryptographische Replika-Pseudo-Zufallsrauschcode 10K für die Korrelation mit dem Empfangssignal 130 einem Korrelator C übergeben, welcher einen im Empfangssignal 130 enthaltenen Pseudo-Zufallsrauschcode 100 decodiert. Ein derartig decodiertes Signal kann durch die Basisbandverarbeitung BB einer zentralen Prozessoreinheit CPU übergeben werden, welche zur Auswertung des Empfangssignals 130 die Schritte vornimmt, welche aufgrund des bereitgestellten kryptographischen Replika-Pseudo-Zufallsrauschcodes 10K möglich sind. Insbesondere werden nur zwei unterschiedliche Replika-Pseudo-Zufallsrauschcodes durch die Bereitstellungseinheit 3 bereitgestellt und es können somit lediglich zwei Signalanteile, welche im Empfangssignal 130 empfangen sind und von zwei unterschiedlichen Satelliten stammen, jeweils durch die Basisbandverarbeitung BB decodiert werden. Entsprechend kann die Prozessoreinheit CPU für die beiden Satellitensignale jeweils einen Zeitversatz ermitteln und daraus eine Zeitinformation ableiten.

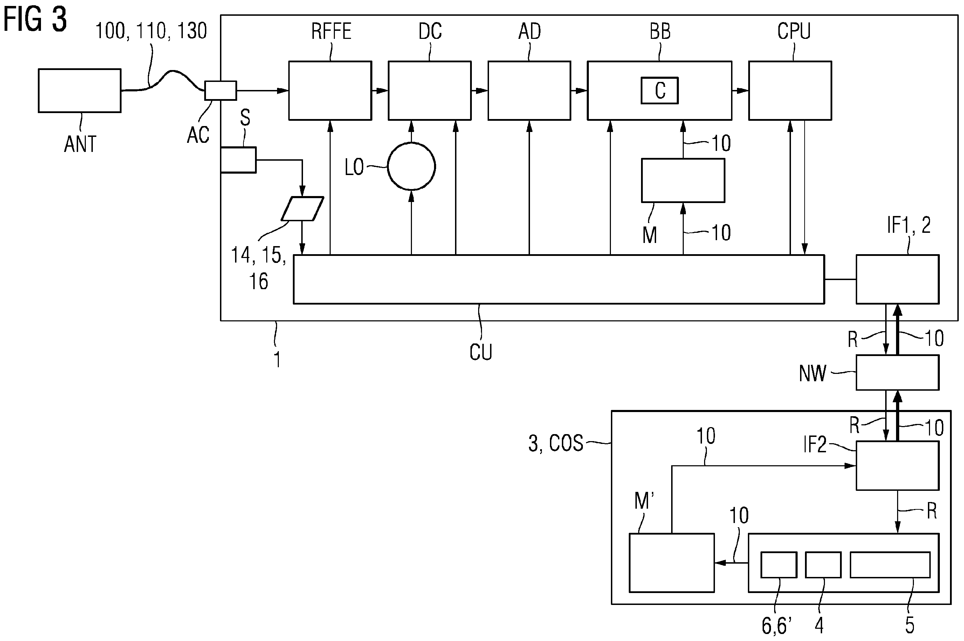

Figur 3 zeigt ein zweites Ausführungsbeispiel der Erfindung, bei welchem der Empfänger verteilt realisiert wird. Funktionsgleiche Elemente sind in den Figuren 2 und 3 mit den identischen Bezugszeichen versehen, sofern nichts anderes angegeben ist.

In Figur 3 ist der schematische Aufbau eines Empfängers 1 bei Verwendung eines sogenannten Cloud-Offload-Servers COS oder Snippet-Servers gezeigt. Damit wird die Zulässigkeitsprüfung extern zu dem Empfänger 1 durchgeführt und der Cloud-Offload-Server COS oder Snippet-Server dient als Bereitstellungseinheit 3. Über eine erste Netzwerkschnittstelle IF1 des Empfängers 1 wird über ein Netzwerk NW eine Anfrage R an die Bereitstellungseinheit 3 geschickt. In die Zulassungsprüfung kann eine Identifizierungsinformation des Empfängers 1, welche mittels der Anfrage R übermittelt wird, eingehen. Der Server kann damit auf vorteilhafte Weise Anfragen anderer Empfänger in die Entscheidung mit einfließen lassen. So können Einschränkungen beispielsweise für eine Gruppe von Empfängern abhängig von erfolgten Anfragen innerhalb der Gruppe festgelegt und durchgesetzt werden.

Mit der Anfrage R können außerdem Werte an die Zulässigkeitsprüfeinheit 5 übergeben werden, welche beispielsweise einen Zeitwert 14 oder einen Beschleunigungswert 15 oder eine Lagewert 16 der Empfangseinheit 2 angeben. Dafür kann die Empfangseinheit 1 über einen Sensor S verfügen. Ergibt die Zulässigkeitsprüfung ein positives Ergebnis, so wird in einem Speicherbereich M' der kryptographische Replika-Pseudo-Zufallsrauschcode 10K als Snippet, d.h. als begrenzter Signalabschnitt, abgespeichert. Insbesondere handelt es sich um einen digitalisierten Signalausschnitt, welcher über eine zweite Netzwerkschnittstelle IF2 des Cloud-Offload-Servers COS dem Netzwerk und damit über die erste Netzwerkschnittstelle IF1 dem Empfänger 1 bereitgestellt wird. Der Snippet-Server kann als Bereitstellungseinheit 3 in einer gesicherten Umgebung eingerichtet sein, so dass der kryptographische Replika-Pseudo-Zufallsrauschcode 10K durch die Bereitstellungseinheit 3 über das Netzwerk NW gesichert der Empfängereinheit 2, welche in diesem Beispiel die erste Netzwerkschnittstelle IF1 ist, bereitgestellt wird.

In einer vorteilhaften Weiterbildung wird die Kommunikation innerhalb des Netzwerkes zusätzlich gesichert, um Integrität der Anfrage R und des kryptographischen Replika-Pseudo-Zufallsrauschcodes 10K sicherzustellen.

Der kryptographische Replika-Pseudo-Zufallsrauschcode 10K wird in einem dafür vorgesehenen Codespeicher M des Empfängers 1 abspeichert. Aus diesem Codespeicher M kann der Korrelator C zum Durchführen der Korrelation den kryptographischen Pseudo-Zufallsrauschcode 10K auslesen und ein Empfangssignal 130, welches einen dazu passenden Pseudo-Zufallsrauschcode 100 im Pseudozufallsrauschsignal 110 aufweist, decodieren. Das Ergebnis der Korrelation wird an die zentrale Prozessoreinheit CPU zum Ermitteln eines Zeitversatzes weitergeleitet.

In einer weiteren vorteilhaften Variante wird die Bereitstellungseinheit um die Zulässigkeitsprüfeinheit ergänzt, so dass der Replika-Pseudozufallsrauschcode nur eingeschränkt bereitgestellt wird, auch für den Fall, dass die gesamte Basisbandverarbeitung ausgelagert auf einem Cloud Offload Server oder einem sogenannten Snippet-Processor durchgeführt wird. Für diese Variante dient die Zulässigkeitsprüfung einer erhöhten Sicherheit innerhalb des Snippet Processors. Ein kompromittierter Empfänger kann dann trotz einer bestehenden Kommunikationsverbindung eine Signalverarbeitung nur eingeschränkt von dem Server anfordern, da dieser die Signalverarbeitung und insbesondere die Korrelation eines Empfangssignals mit dem Replika-Pseudozufallsrauschcode nur bei positivem Ergebnis der Zulässigkeitsprüfung durchführt.

## Patentansprüche

1. Verfahren zum gesicherten Bereitstellen (B) eines Replika-Pseudozufallsrausch-Codes (10) von einer Bereitstellungseinheit an eine Empfängereinheit (2), wobei mittels des Replika-Pseudozufallsrausch-Codes (10) eine Korrelation mit einem Empfangssignal (130) durchgeführt wird,
**dadurch gekennzeichnet, dass** der Replika-Pseudozufallsrausch-Code (10) eingeschränkt in Abhängigkeit von einem Ergebnis (J, N) einer Zulässigkeitsprüfung bereitgestellt wird, wobei zum Durchführen (A) der Zulässigkeitsprüfung Werte (11,..., 17) erfasst werden und mit vorgegebenen Schwellenwerten abgeglichen werden, wobei Eigenschaften des Empfangssignals bei der Zulässigkeitsprüfung berücksichtigt werden.

2. Verfahren nach Anspruch 1, wobei ein in einem durch die Empfängereinheit (2) empfangenen Empfangssignal (130) enthaltener Pseudozufallsrauschcode (100) mittels einer Korrelationsmethode mit Hilfe des Replika-Pseudozufallsrausch-Codes (10) dekodierbar ist.

3. Verfahren nach einem der vorstehenden Ansprüche, **dadurch gekennzeichnet, dass** ein in einem durch die Empfängereinheit (2) empfangenen Empfangssignal (130) enthaltenes Pseudozufallsrauschsignal (110) mittels einer Korrelationsmethode ausgewertet wird.

4. Verfahren nach einem der vorstehenden Ansprüche, **dadurch gekennzeichnet, dass** ein Pseudozufallsrauschsignal (110) durch die Empfängereinheit als Bestandteil eines Empfangssignals (130), insbesondere eines Satellitennavigationssignals, empfangen wird.

5. Verfahren nach Anspruch 4, **dadurch gekennzeichnet, dass** zum Durchführen (A) der Zulässigkeitsprüfung ein Satellitenidentifizierer (11) des Empfangssignals (130) erfasst wird.

6. Verfahren nach Anspruch 4 oder 5, **dadurch gekennzeichnet, dass** zum Durchführen (A) der Zulässigkeitsprüfung ein Frequenzband (12) des Empfangssignals (130) erfasst wird.

7. Verfahren nach einem der vorstehenden Ansprüche, **dadurch gekennzeichnet, dass** zum Durchführen (A) der Zulässigkeitsprüfung eine Information über Satellitenbahndaten (13) erfasst wird.

8. Verfahren nach einem der vorstehenden Ansprüche, **dadurch gekennzeichnet, dass** zum Durchführen (A) der Zulässigkeitsprüfung ein Zeitwert (14) erfasst wird.

9. Verfahren nach einem der vorstehenden Ansprüche, **dadurch gekennzeichnet, dass** zum Durchführen (A) der Zulässigkeitsprüfung ein Beschleunigungswert (15) oder Lagewert (16) der Empfangseinheit (2) mittels eines Sensors (S) erfasst wird.

10. Verfahren nach einem der vorstehenden Ansprüche, **dadurch gekennzeichnet, dass** zum Durchführen (A) der Zulässigkeitsprüfung eine Historie (17) über zeitlich vor dem Durchführen bereitgestellte Replika-Pseudozufallsrausch-Codes (10') geprüft wird.

11. Bereitstellungseinheit (3) zum gesicherten Bereitstellen (B) eines Replika-Pseudozufallsrausch-Codes (10) an eine Empfängereinheit (2), wobei mittels des Replika-Pseudozufallsrausch-Codes (10) eine Korrelation mit einem Empfangssignal (130) durchführbar ist,
**gekennzeichnet durch** eine Zulässigkeitsprüfeinheit (5) zum eingeschränkten Bereitstellen des Replika-Pseudozufallsrausch-Codes (10) in Abhängigkeit von einem Ergebnis (J, N) einer Zulässigkeitsprüfung, wobei zum Durchführen (A) der Zulässigkeitsprüfung Werte (11,..., 17) erfassbar und mit vorgegebenen Schwellenwerten abgleichbar sind und wobei Eigenschaften des Empfangssignals bei der Zulässigkeitsprüfung berücksichtigt werden.

12. Bereitstellungseinheit nach Anspruch 11, wobei der Replika-Pseudozufallsrausch-Code (10) durch einen Replika-Pseudozufallsrausch-Code-Generator (4) der Bereitstellungseinheit (3) oder einen externen, mit der Bereitstellungseinheit (3) verbindbaren Replika-Pseudozufallsrausch-CodeGenerator generierbar ist.

13. Bereitstellungseinheit (3) nach einem der Ansprüche 11 oder 12, wobei ein Schlüsselgenerator (6) oder Schlüsselspeicher (6') zum Erzeugen eines kryptographischen Schlüssels (K) ausgebildet ist, wobei mittels des kryptographischen Schlüssels ein kryptographischer Replika-Pseudozufallsrausch-Code (10k) generierbar ist.

14. Bereitstellungseinheit nach einem der Ansprüche 11 bis 13, wobei die Bereitstellungseinheit (3) auf einem Empfänger (1) mit Empfängereinheit (2) ausgebildet ist.

15. Bereitstellungseinheit (3) nach Anspruch 14, wobei ein Tamperschutz zum Erkennen einer Manipulation oder Beschädigung für die Bereitstellungseinheit (3) vorgesehen ist.

## Claims

1. Method for securely providing (B) a receiver unit (2) with a replica pseudo-random noise code (10) from a provision unit, wherein a correlation with a reception signal (130) is carried out using the replica pseudo-random noise code (10), **characterized in that** the replica pseudo-random noise code (10) is provided in a restricted manner on the basis of a result (Y, N) of an admissibility check, in which case, in order to carry out (A) the admissibility check, values (11,..., 17) are recorded and are compared with predefined threshold values, properties of the reception signal being taken into account during the admissibility check.

2. Method according to Claim 1, a pseudo-random noise code (100) contained in a reception signal (130) received by the receiver unit (2) being able to be decoded using a correlation method with the aid of the replica pseudo-random noise code (10) .

3. Method according to one of the preceding claims, **characterized in that** a pseudo-random noise signal (110) contained in a reception signal (130) received by the receiver unit (2) is evaluated using a correlation method.

4. Method according to one of the preceding claims, **characterized in that** a pseudo-random noise signal (110) is received by the receiver unit as part of a reception signal (130), in particular a satellite navigation signal.

5. Method according to Claim 4, **characterized in that**, in order to carry out (A) the admissibility check, a satellite identifier (11) of the reception signal (130) is recorded.

6. Method according to Claim 4 or 5, **characterized in that**, in order to carry out (A) the admissibility check, a frequency band (12) of the reception signal (130) is recorded.

7. Method according to one of the preceding claims, **characterized in that**, in order to carry out (A) the admissibility check, an item of information relating to satellite orbit data (13) is acquired.

8. Method according to one of the preceding claims, **characterized in that**, in order to carry out (A) the admissibility check, a time value (14) is recorded.

9. Method according to one of the preceding claims, **characterized in that**, in order to carry out (A) the admissibility check, an acceleration value (15) or a position value (16) of the receiving unit (2) is recorded using a sensor (S) .

10. Method according to one of the preceding claims, **characterized in that**, in order to carry out (A) the admissibility check, a history (17) of replica pseudo-random noise codes (10') provided temporally before carrying out the check is checked.

11. Provision unit (3) for securely providing (B) a receiver unit (2) with a replica pseudo-random noise code (10), it being possible to carry out a correlation with a reception signal (130) using the replica pseudo-random noise code (10), **characterized by** an admissibility checking unit (5) for providing the replica pseudo-random noise code (10) in a restricted manner on the basis of a result (Y, N) of an admissibility check, in which case, in order to carry out (A) the admissibility check, values (11,..., 17) can be recorded and can be compared with predefined threshold values and properties of the reception signal being taken into account during the admissibility check.

12. Provision unit according to Claim 11, the replica pseudo-random noise code (10) being able to be generated by a replica pseudo-random noise code generator (4) of the provision unit (3) or an external replica pseudo-random noise code generator which can be connected to the provision unit (3).

13. Provision unit (3) according to either of Claims 11 and 12, a key generator (6) or a key memory (6') being designed to generate a cryptographic key (K), a cryptographic replica pseudo-random noise code (10k) being able to be generated using the cryptographic key.

14. Provision unit according to one of Claims 11 to 13, the provision unit (3) being formed on a receiver (1) with a receiver unit (2).

15. Provision unit (3) according to Claim 14, tamper protection being provided for the provision unit (3) for the purpose of detecting manipulation or damage.

## Revendications

1. Procédé de mise à disposition sécurisée (B) d'un code de bruit pseudo-aléatoire de réplique (10) d'une unité de mise à disposition à une unité de réception (2), une corrélation avec un signal de réception (130) étant exécutée au moyen du code de bruit pseudo-aléatoire de réplique (10), **caractérisé en ce que** le code de bruit pseudo-aléatoire de réplique (10) est mis à disposition de manière limitée en fonction d'un résultat (J, N) d'un contrôle d'admissibilité, des valeurs (11, ..., 17) étant saisies pour l'exécution (A) du contrôle d'admissibilité et étant comparées à des valeurs seuils données, des caractéristiques du signal de réception étant prises en compte lors du contrôle d'admissibilité.

2. Procédé selon la revendication 1, un code de bruit pseudo-aléatoire (100) contenu dans un signal de réception (130) reçu par l'unité de réception (2) pouvant être décodé au moyen d'une méthode de corrélation à l'aide du code de bruit pseudo-aléatoire de réplique (10).

3. Procédé selon l'une des revendications précédentes, **caractérisé en ce qu'**un signal de bruit pseudo-aléatoire (110) contenu dans un signal de réception (130) reçu par l'unité de réception (2) est évalué au moyen d'une méthode de corrélation.

4. Procédé selon l'une des revendications précédentes, **caractérisé en ce qu'**un signal de bruit pseudo-aléatoire (110) est reçu par l'unité de réception en tant que composant d'un signal de réception (130), et plus particulièrement d'un signal de navigation par satellite.

5. Procédé selon la revendication 4, **caractérisé en ce qu'**un identifiant satellite (11) du signal de réception (130) est saisi pour l'exécution (A) du contrôle d'admissibilité.

6. Procédé selon la revendication 4 ou 5, **caractérisé en ce qu'**une bande de fréquence (12) du signal de réception (130) est saisie pour l'exécution (A) du contrôle d'admissibilité.

7. Procédé selon l'une des revendications précédentes, **caractérisé en ce qu'**une information sur des données d'orbite de satellite (13) est saisie pour l'exécution (A) du contrôle d'admissibilité.

8. Procédé selon l'une des revendications précédentes, **caractérisé en ce qu'**une valeur temporelle (14) est saisie pour l'exécution (A) du contrôle d'admissibilité.

9. Procédé selon l'une des revendications précédentes, **caractérisé en ce qu'**une valeur d'accélération (15) ou valeur de position (16) de l'unité de réception (2) est saisie au moyen d'un capteur (S) pour l'exécution (A) du contrôle d'admissibilité.

10. Procédé selon l'une des revendications précédentes, **caractérisé en ce qu'**est contrôlé, pour l'exécution (A) du contrôle d'admissibilité, un historique (17) relatif à des codes de bruit pseudo-aléatoire de réplique (10') mis à disposition temporellement avant l'exécution.

11. Unité (3) de mise à disposition sécurisée (B) d'un code de bruit pseudo-aléatoire de réplique (10) à une unité de réception (2), une corrélation avec un signal de réception (130) pouvant être exécutée au moyen du code de bruit pseudo-aléatoire de réplique (10), **caractérisée par** une unité de contrôle d'admissibilité (5) pour la mise à disposition limitée du code de bruit pseudo-aléatoire de réplique (10) en fonction d'un résultat (J, N) d'un contrôle d'admissibilité, des valeurs (11, ..., 17) pouvant être saisies pour l'exécution (A) du contrôle d'admissibilité et pouvant être comparées à des valeurs seuils données, et des caractéristiques du signal de réception étant prises en compte lors du contrôle d'admissibilité.

12. Unité de mise à disposition selon la revendication 11, le code de bruit pseudo-aléatoire de réplique (10) pouvant être généré par un générateur (4) de code de bruit pseudo-aléatoire de réplique de l'unité de mise à disposition (3) ou par un générateur de code de bruit pseudo-aléatoire de réplique externe pouvant être relié à l'unité de mise à disposition (3).

13. Unité de mise à disposition (3) selon l'une des revendications 11 ou 12, un générateur de clé (6) ou une mémoire de clé (6') étant réalisés pour générer une clé cryptographique (K), un code de bruit pseudo-aléatoire de réplique cryptographique (10k) pouvant être généré au moyen de la clé cryptographique.

14. Unité de mise à disposition selon l'une des revendications 11 à 13, l'unité de mise à disposition (3) étant réalisée sur un récepteur (1) avec unité de réception (2).

15. Unité de mise à disposition (3) selon la revendication 14, une protection anti-falsification pour identifier une manipulation ou un endommagement étant prévue pour l'unité de mise à disposition (3).
